# NEUE EUROPÄISCHE PATENTSCHRIFT

(11) **EP 2 657 156 B2**
(45) Veröffentlichungstag und Bekanntmachung des Hinweises auf die Entscheidung über den Einspruch: **13.11.2019**
(45) Hinweis auf die Patenterteilung: 25.05.2016
(21) Anmeldenummer: 13151807.8
(22) Anmeldetag: 18.01.2013
(51) Int. Cl.: B65G 1/04

(54) **Umsetzgerät mit mehreren Shuttles**
Handling unit with multiple shuttles
Appareil de conversion à plusieurs navettes

(30) Priorität: 23.04.2012 DE 102012206637
(43) Veröffentlichungstag der Anmeldung: 30.10.2013
(73) Patentinhaber: Krones AG, 93073 Neutraubling (DE)
(72) Erfinder: Schüsslburner, Helmut, 93073 Neutraubling (DE)
(74) Vertreter: Grünecker Patent- und Rechtsanwälte PartG mbB

(56) Entgegenhaltungen:
- EP-A1- 0 376 621
- DE-A1- 10 300 319
- DE-A1- 19 626 966
- GB-A- 2 094 770
- JP-A- S 514 774
- JP-U- H 037 114
- JP-U- S5 168 180

## Beschreibung

### Gebiet der Erfindung

Die vorliegende Erfindung betrifft ein Umsetzgerät zur Bedienung eines Kanallagers.

### Stand der Technik

Lagersysteme dienen dem Lagern von Ladeeinheiten, die beispielsweise hintereinander auf Paletten oder mit Gitterboxen oder Behältern bereitgestellt werden. Insbesondere sind in der Materialflusstechnik Kanallagersysteme bekannt, die vorteilhaft für große Produktchargen Verwendung finden. Durch die Lagerung von Ladeeinheiten in Kanälen werden bei vollen Lagerkanälen eine hohe Volumennutzung des Lagerraums bzw. mit wenigen Transportwegen und vielen Lagerstellplätzen hohe Lagerkapazitäten erreicht. Ständer und Auflagen in Palettenregalen werden hierbei zu Kanälen angeordnet. Im Rahmen der automatisierten Regalbedientechnik setzt ein Umsetzgerät, insbesondere ein Regalbediengerät, ein Shuttle oder einen Satelliten in einem Lagerkanal eines Palettenregals ab, so dass das Shuttle oder der Satellit Paletten, Behältern, Kisten o.ä. einlagern oder abholen kann. Ein Shuttle kann kabellos über Schleifleitungen, die in den Lagerkanälen des Kanallagers vorgesehen sind, mittels berührungsloser Energieübertragung oder durch Batterien, Akkus oder Kondensatoren mit Energie versorgt werden. In einem Kanallager lässt sich mithilfe der Umsetzgeräte eine große Anzahl an vorzugsweise gleichartigen Paletten o.ä. beispielsweise nach dem First-In-First-Out-Prinzip oder First-In-Last-Out-Prinzip in Lagerkanälen handhaben. In der JP S51 68180 U wird ein gattungsgemäßen Umsetzgerät mit zwei Transportplätzen zur Aufnahme von jeweils einem Shuttle beschrieben.

Die Umlagerung und Auslagerung von Ladeeinheiten in einem Kanallager ist jedoch trotz des Einsatzes von Umsetzgeräten mit Shuttle relativ zeitaufwändig. Insbesondere sinkt häufig der Volumennutzungsgrad im Verlauf des praktischen Betriebs drastisch ab, da der Füllgrad durch teilweise geleerte Lagerkanäle, die durch nichtvorhersehbares Nachfrageverhalten verursacht werden, verschlechtert wird. Im Verlauf der Lebenszeit von Lagersystemen erhöht sich häufig auch die Anzahl an zu verwaltenden Artikeln, was in der Folge zu noch mehr nur teilweise gefüllten Lagerkanälen führt. Der vorliegenden Erfindung liegt die Aufgabe zugrunde, die Effizienz der Bedienung von Kanallagersystemen gegenüber dem Stand der Technik zu erhöhen.

### Beschreibung der Erfindung

Die oben genannte Aufgabe wird durch ein Umsetzgerät (ein Regalbediengerät oder ein Verfahrwagen) zur Bedienung eines Kanallagers gemäß Anspruch 1 gelöst. Das beanspruchte Umsetzgerät umfasst einen ersten Transportplatz zur Aufnahme eines ersten Shuttles und einen zweiten Transportplatz, der von dem ersten Transportplatz verschieden ist, zur Aufnahme eines zweiten Shuttles. Weiterhin umfasst das Umsetzgerät ein Lastaufnahmemittel, das den ersten und den zweiten Transportplatz bereitstellt, und eine Hubeinheit, auf der das Lastaufnahmemittel montiert ist. Die Hubeinheit ist dazu ausgebildet ist, das Lastaufnahmemittel vertikal zu bewegen. Der erste Transportplatz ist zum Tragen von einer Ladeeinheit ausgebildet und befindet sich oberhalb der Hubeinheit, während der zweite Transportplatz nicht zum Tragen einer Ladeeinheit ausgebildet ist und sich unterhalb der Hubeinheit befindet. Das zweite Shuttle kann von dem ersten Shuttle verschieden sein. Es kann auch ein und dasselbe Shuttle zu einer Zeit sich auf dem ersten Transportplatz und zu einer anderen Zeit auf dem zweiten Transportplatz befinden. Das Umsetzgerät kann sowohl das erste als auch das zweite Shuttle umfassen. Es ist auch möglich, dass das Umsetzgerät mehr als zwei Transportplätze und mehr als zwei Shuttle umfasst. Die Shuttles können beispielsweise eine eigene Energieversorgung mittels einer Batterie, eines Akkus oder eines Kondensators aufweisen oder durch Schleifkontakte in den Lagerkanälen versorgt werden, und sie können sich beispielsweise auf in den Lagerkanälen vorgesehenen Schienen bewegen. Der erste und/oder zweite Transportplatz kann mit einer Ladevorrichtung zur Energieversorgung des ersten bzw. zweiten Shuttles ausgestattet sein.

Das erfindungsgemäße Umsetzgerät kann somit gleichzeitig zwei Shuttles transportieren und in verschiedenen Lagerkanälen eines Kanallagers absetzen. Das erste Shuttle kann eine Ladeeinheit (ein Lagergut; beispielsweise eine Palette mit einem Produkt) in einen Lagerkanal einlagern oder aus dem Lagerkanal holen und mit dieser Ladeeinheit auf den ersten Transportplatz zurückkehren. Währenddessen kann das zweite Shuttle eine Umlagerung einer Ladeeinheit oder mehrerer Ladeeinheiten in einem anderen Lagerkanal, in dem es zuvor abgesetzt wurde, vornehmen. Hierbei können beide Shuttles autonom arbeiten. Insbesondere kann das Umsetzgerät das erste Shuttle wiederaufnehmen und beispielsweise eine mit dem ersten Shuttle aufgenommen Ladeeinheit zum Auslagern transportieren, ohne auf das zweite Shuttle warten zu müssen. Das zweite Shuttle kann zur Erhöhung des Füllgrads eines Lagerkanals dienen, indem es eine Ladeeinheit in einen Leerraum innerhalb des Lagerkanals nachrückt. Wird insbesondere ein Regal / Lagerkanal von zwei Seiten bedient, kann es vorkommen, dass eine Ladeeinheit an einem

Kanalanfang den Zugang zu dem Lagerkanal blockiert, auch wenn Ladeeinheiten der übrigen Stellplätze zumindest zum Teil bereits ausgelagert sind. In einem solchen Fall kann das zweite Shuttle die blockierende Ladeeinheit Richtung Kanalende zur nachfolgenden Auslagerung versetzen.

Dadurch, dass das Umsetzgerät erfindungsgemäß zwei Shuttle transportieren und absetzen kann, kann es also ein Einlagern und Auslagern mithilfe des ersten Shuttles vornehmen, während das zweite Shuttle eine Umlagerung von Ladeeinheiten zwecks Optimierung der Lagerkanalbelegung oder zur Vorbereitung eines nachfolgenden Transportes vornehmen kann, wodurch die gesamte Lagerbedienung/-verwaltung effizienter gestaltet werden kann.

Das Umsetzgerät muss zum Tragen einer Ladeeinheit ausgebildet sein, d.h. es muss einen stark ausgebildeten Träger aufweisen, der baulich relativ aufwändig gearbeitet sein muss. Das zweite Shuttle wird jedoch zusätzlich an einem zweiten Transportplatz transportiert, der nicht auch zum Tragen einer Ladeeinheit ausgebildet ist. Somit ist erfindungs gemäß der erste Transportplatz des Umsetzgeräts zum Tragen von einer Ladeeinheit ausgebildet, während der zweite Transportplatz des Umsetzgeräts nicht zum Tragen einer Ladeeinheit ausgebildet ist.

Der erste und der zweite Transportplatz sind erfindungsgemäß auf einem Lastaufnahmemittel des Umsetzgeräts vorgesehen sein, wobei das Umsetzgerät eine Hubeinheit aufweist, auf der das Lastaufnahmemittel montiert ist, wobei die Hubeinheit dazu ausgebildet ist, das Lastaufnahmemittel vertikal zu bewegen, um so das erste und zweite Shuttle auf verschiedenen vertikalen Ebenen eines Kanallagers absetzen bzw. aufnehmen zu können.

Gemäß einem weiteren Beispiel kann das Umsetzgerät dazu ausgebildet sein, eine Ladeeinheit ohne Shuttle aufzunehmen. Es kann dazu weiterhin ein entsprechend ausgebildetes Förderelement umfassen. Das Förderelement kann dazu ausgebildet sein, eine Ladeeinheit an das erste Shuttle zu übergeben bzw. von dem ersten Shuttle zu übernehmen. Weiterhin kann das Förderelement dazu ausgebildet sein, an einem Einlagerungs-/Auslagerungspunkt eines Kanallagers eine Ladeeinheit ohne Shuttle an ein stationäres Fördersystem oder ein mobiles Fördermittel zu übergeben. Somit kann beispielsweise eine von dem ersten oder zweiten Shuttle gelieferte Ladeeinheit von dem Umsetzgerät an ein anderes Fördermittel zum Transportieren aus dem Lager heraus übergeben werden, während das erste oder zweite Shuttle in dem Lagerkanal verbleiben kann, um dort eine Umlagerung einer oder mehrerer Ladeeinheiten vorzunehmen. Der erste Transportplatz zur Aufnahme des ersten Shuttles kann sich auf dem Förderelement befinden.

Die vorliegende Erfindung stellt auch ein Lagersystem bereit, das ein Kanallager und ein Umsetzgerät gemäß einem der oben beschriebenen Beispiele umfasst.

Zudem wird bereitgestellt ein Verfahren zur Bedienung eines Kanallagers, mit den Schritten Bereitstellen eines Umsetzgeräts gemäß einem der oben beschriebenen Beispiele;
Absetzen des ersten Shuttles in einem ersten Lagerkanal des Kanallagers;
Absetzen des zweiten Shuttles in einem zweiten Lagerkanal des Kanallagers (insbesondere während sich das erste Shuttle in dem ersten Lagerkanal befindet), der horizontal und/oder vertikal von dem ersten Lagerkanal beabstandet ist;
a) Einlagern einer Ladeeinheit in dem ersten Lagerkanal durch das erste Shuttle oder b) Aufnehmen einer Ladeeinheit aus dem ersten Lagerkanal durch das erste Shuttle und Aufnehmen des ersten Shuttles mit der Ladeeinheit auf dem ersten Transportplatz des Umsetzgeräts; und
c) (insbesondere zeitgleich) Umlagern einer Ladeeinheit durch das zweite Shuttle in dem zweiten Lagerkanal von einem zentralen Bereich des Lagerkanals an eine Übergabeposition des Lagerkanals, an der die Ladeeinheit von dem Umsetzgerät oder einem anderen Umsetzgerät aufgenommen werden kann. Die Übergabeposition kann sich an einem Kanalanfang oder einem gegenüberliegenden Kanalende befinden. Auch können eine oder mehrere Ladeeinheiten an das Kanalende und eine oder mehrere Ladeeinheiten an den Kanalanfang versetzt werden.

Auch wird bereitgestellt ein Verfahren zur Bedienung eines Kanallagers, mit den Schritten Bereitstellen eines Umsetzgeräts gemäß einem der oben beschriebenen Beispiele;
Absetzen des ersten Shuttles in einem ersten Lagerkanal des Kanallagers;
Absetzen des zweiten Shuttles in einem zweiten Lagerkanal des Kanallagers, der horizontal und/oder vertikal von dem ersten Lagerkanal beabstandet ist;
a) Einlagern einer Ladeeinheit durch das erste Shuttle in dem ersten Lagerkanal oder b) Aufnehmen einer Ladeeinheit aus dem ersten Lagerkanal durch das erste Shuttle und Verbringen der Ladeeinheit an eine Übergabeposition des Lagerkanals und Aufnehmen einer weiteren Ladeeinheit (6) von einer Übergabeposition durch das Umsetzgerät (1) mithilfe eines Förderelements des Umsetzgeräts (1) und ohne Verwendung des ersten Shuttles (4); und
c) (insbesondere zeitgleich) Umlagern einer Ladeeinheit durch das zweite Shuttle in dem zweiten Lagerkanal von einem zentralen Bereich des Lagerkanals an eine Übergabeposition des Lagerkanals, an der die Ladeeinheit von dem Umsetzgerät oder einem anderen Umsetzgerät aufgenommen werden kann.

Im Folgenden werden Ausführungsformen eines erfindungsgemäßen Umsetzgeräts unter Bezugnahme auf die Zeichnung beschrieben. Die beschriebenen Ausführungsformen sind in jeder Hinsicht lediglich als illustrativ und nicht als einschränkend anzusehen und verschiedene Kombinationen der angeführten Merkmale sind in der Erfindung eingeschlossen.
Figur 1 veranschaulicht ein Regalbediengerät gemäß einem Beispiel der vorliegenden Erfindung, das zwei Transportplätze für Shuttles aufweist.
Figur 2 veranschaulicht den Einsatz autonomer Shuttle, die von dem erfindungsgemäßen Regalbediengerät abgesetzt werden können.

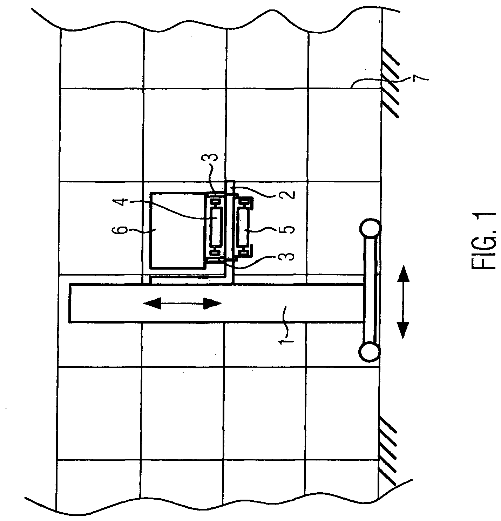

In Figur 1 ist ein Regalbediengerät 1 gemäß einer Ausführungsform der vorliegenden Erfindung dargestellt, das eine Hubeinheit 2, ein Förderelement 3, ein erstes Shuttle 4 und ein zweites Shuttle 5 aufweist. Mithilfe des Regalbediengeräts 1 kann eine Palette 6 in ein Kanallager 7 eingelagert oder aus dem Kanallager 7 abgeholt werden. Wie gezeigt, kann das erste Shuttle 4 ein Palette tragen, d.h. dass der Transportplatz für das erste Shuttle 4 zum Tragen der Last der Palette ausgebildet sein muss. Das zweite Shuttle 5 hingegen trägt, wenn es sich auf seinem Transportplatz auf dem Regalbediengerät befindet, keine Last. Der Transportplatz für das zweite Shuttle 5 ist somit nicht dazu ausgebildet, die Last einer Ladeeinheit zu tragen.

Das Förderelement 3 dient insbesondere der Aufnahme bzw. Abgabe von Paletten an Übergabeplätzen des Lagersystems, das das Kanallager 7 umfasst. Das Förderelement 3 kann eine Verschiebeeinheit aufweisen, um variabel Lücken bei der Übergabe beispielsweise zu einem stationären Förderer zu überbrücken. Das Regalbediengerät 1 bewegt sich horizontal in einer Regalgasse und die Hubeinheit 2 bewegt sich vertikal, so dass verschiedene Ebenen des Kanallagers 7 bedient werden können. Das Lagersystem kann auf der gegenüberliegenden Seite eine weitere Regalgasse mit einem vergleichbaren Regalbediengerät aufweisen, so dass die Lagerkanäle von zwei Seiten über die zwei Regalgassen bedient werden können.

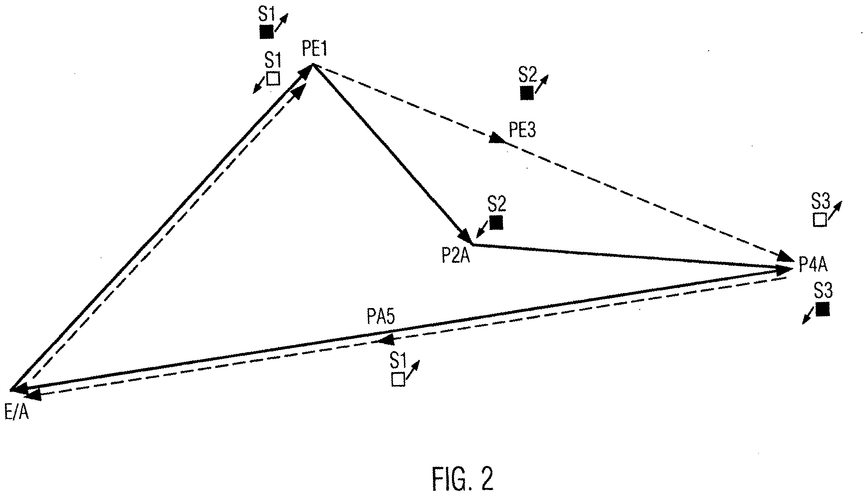

Figur 2 veranschaulicht einen Arbeitsablauf in einem Kanallager mithilfe des erfindungsgemäßen Umsetzgeräts, beispielsweise des in Figur 1 dargstellten Regalbediengeräts, und autonomer Shuttle. An einem Einlager-/Auslagerpunkt E/A nimmt das Umsetzgerät eine Ladeeinheit auf. Die Ladeeinheit wird auf ein erstes Shuttle S1 verbracht, das sich auf einem ersten Transportplatz des Umsetzgeräts befindet, der zum Tragen der Last einer Ladeeinheit ausgebildet ist. Danach fährt das Umsetzgerät zu dem Einlagerpunkt P1E. Dort wird das erste Shuttle S1 mit der Ladeeinheit abgesetzt (in Figur 2 durch S1, ein ausgefülltes Quadrat und einen diagonal nach oben zeigenden Pfeil gekennzeichnet). Alternativ kann das Umsetzgerät die einzulagernde Ladeeinheit an Einlager-/Auslagerpunkt E/A mithilfe seines Förderelements ohne Shuttleunterstützung aufnehmen, und es kann das erste Shuttle S1 an dem Einlagerpunkt P1E im leeren Zustand auf das Umsetzgerät warten, um die einzulagernde Ladeeinheit in Empfang zu nehmen. In jedem Fall fährt das Umsetzgerät ohne das erste Shuttle S1 von dem Einlagerpunkt P1 E zu dem Auslagerpunkt P2A, wo es ein zweites Shuttle S2 mit einer auszulagernden Ladeeinheit abholt (in Figur 1 durch S2, ein ausgefülltes Quadrat und einen diagonal nach unten zeigenden Pfeil gekennzeichnet).

Mit dem zweiten Shuttle S2 auf dem ersten Transportplatz fährt das Umsetzgerät zu dem Auslagerpunkt P4A, wo ein leeres drittes Shuttle S3 abgesetzt wird (in Figur 1 durch S3, ein leeres Quadrat und einen diagonal nach oben zeigenden Pfeil gekennzeichnet), das das Umsetzgerät auf einem zweiten Transportplatz während der gesamten Fahrt von dem Einlager-/Auslagerpunkt E/A bis zu dem Auslagerpunkt P4A im leeren Zustand mitgenommen hat. Der zweite Transportplatz ist nicht für das Tragen der Last einer Ladeeinheit ausgelegt. Nach Absetzen des dritten Shuttles S3 kehrt das Umsetzgerät zu dem Einlager-/Auslagerpunkt E/A zurück, um dort die Ladeeinheit des zweiten Shuttles S2 zu entladen. Danach wird das Shuttle S2 wieder mit einer neuen einzulagernden Ladeeinheit befrachtet. Sodann fährt das Umsetzgerät mit dem befrachteten Shuttle S2 wieder zu dem Einlagerpunkt PE1, wo es das leere erste Shuttle S1, das inzwischen die einzulagernde Ladeeinheit eingelagert hat, abholt (in Figur 1 durch S1, ein leeres Quadrat und einen diagonal nach unten zeigenden Pfeil gekennzeichnet).

Danach fährt das Umsetzgerät mit dem zweiten Shuttle S2 auf dem ersten Transportplatz und dem ersten Shuttle S1 auf dem zweiten Transportplatz zu dem Einlagerpunkt PE3, wo es das zweite Shuttle S2 mit der einzulagernden Ladeeinheit absetzt (in Figur 1 durch S2, ein ausgefülltes Quadrat und einen diagonal nach oben zeigenden Pfeil gekennzeichnet). Sodann fährt das Umsetzgerät zu dem Auslagerpunkt PA4, wo es das dritte Shuttle S3, das inzwischen eine Ladeeinheit geholt hat, abholt (in Figur 1 durch S3, ein ausgefülltes Quadrat und einen diagonal nach unten zeigenden Pfeil gekennzeichnet). Mit dem befrachteten dritten Shuttle S3 auf dem ersten Transportplatz fährt das Umsetzgerät dann zu dem Auslagerpunkt PA5, wo es das leere erste Shuttle S1 von dem zweiten Transportplatz aus absetzt (in Figur 1 durch S1, ein leeres Quadrat und einen diagonal nach oben zeigenden Pfeil gekennzeichnet), damit es eine Ladeeinheit holen kann. Nach Absetzen des ersten Shuttles S1 fährt das Umsetzgerät wieder zu dem Einlager-/Auslagerpunkt E/A, um dort die Ladeeinheit des dritten Shuttles S3 zu entladen.

Aus der Beschreibung der Figur 2 erhellt, dass der Arbeitsablauf mithilfe des erfindungsgemäßen Umsetzgeräts im Vergleich zu einem Arbeitsablauf mithilfe eines herkömmlichen Umsetzgeräts mit nur einem Transportplatz für ein Shuttle deutlich effizienter erfolgt.

## Patentansprüche

1. Umsetzgerät (1), das umfasst:
einen ersten Transportplatz zur Aufnahme eines ersten Shuttles (4); und
einen zweiten Transportplatz, der von dem ersten Transportplatz verschieden ist, zur Aufnahme eines zweiten Shuttles (5);
wobei das Umsetzgerät (1) ein Lastaufnahmemittel, das den ersten und den zweiten Transportplatz bereitstellt, und eine Hubeinheit (2), auf der das Lastaufnahmemittel montiert ist, umfasst;
wobei die Hubeinheit (2) dazu ausgebildet ist, das Lastaufnahmemittel vertikal zu bewegen;
**dadurch gekennzeichnet, dass**
der erste Transportplatz zum Tragen von einer Ladeeinheit (6) ausgebildet ist und sich oberhalb der Hubeinheit befindet, während der zweite Transportplatz nicht zum Tragen einer Ladeeinheit (6) ausgebildet ist und sich unterhalb der Hubeinheit (2) befindet.

2. Umsetzgerät (1) nach Anspruch 1, das weiterhin ein erstes Shuttle (4) auf dem ersten Transportplatz und ein zweites Shuttle (5) auf dem zweiten Transportplatz umfasst.

3. Umsetzgerät (1) gemäß einem der vorhergehenden Ansprüche, das weiterhin ein Förderelement (3) umfasst, das dazu ausgebildet ist, an einem Einlagerungspunkt eines Kanallagers (7) eine Ladeeinheit (6) ohne Shuttle von einem stationären Fördersystem oder einem mobilen Fördermittel zu übernehmen oder am Auslagerungspunkt eines Kanallagers (7) eine Ladeeinheit (6) ohne Shuttle an ein stationäres Fördersystem oder ein mobiles Fördermittel zu übergeben.

4. Umsetzgerät (1) nach Anspruch 4, wobei das Förderelement (3) weiterhin dazu ausgebildet ist, eine Ladeeinheit (6) an das erste Shuttle (4) zu übergeben bzw. von dem ersten Shuttle (4) zu übernehmen.

5. Umsetzgerät (1) nach Anspruch 3 oder 4, wobei sich der erste Transportplatz auf dem Förderelement (3) befindet.

6. Umsetzgerät (1) gemäß einem der vorhergehenden Ansprüche, in dem der erste und/oder zweite Transportplatz mit einer Ladevorrichtung zur Energieversorgung des ersten bzw. zweiten Shuttles (4, 5) ausgestattet ist.

7. Umsetzgerät (1) gemäß einem der vorhergehenden Ansprüche, in dem das Umsetzgerät (1) ein Regalbediengerät ist.

8. Lagersystem, das ein Kanallager (7) und ein Umsetzgerät (1) gemäß einem der vorhergehenden Ansprüche umfasst.

9. Verfahren zur Bedienung eines Kanallagers (7), mit den Schritten
Bereitstellen eines Umsetzgeräts (1) gemäß einem der Ansprüche 1 bis 7;
Absetzen des ersten Shuttles (4) in einem ersten Lagerkanal des Kanallagers (7);
Absetzen des zweiten Shuttles (5) in einem zweiten Lagerkanal des Kanallagers (7), der horizontal und/oder vertikal von dem ersten Lagerkanal beabstandet ist;
a) Einlagern einer Ladeeinheit (6) in dem ersten Lagerkanal durch das erste Shuttle (4) oder b) Aufnehmen einer Ladeeinheit (6) aus dem ersten Lagerkanal durch das erste Shuttle (4) und Aufnehmen des ersten Shuttles (4) mit der Ladeeinheit (6) auf dem ersten Transportplatz des Umsetzgeräts (1); und
c) Umlagern einer Ladeeinheit (6) durch das zweite Shuttle (5) in dem zweiten Lagerkanal von einem zentralen Bereich des Lagerkanals an eine Übergabeposition des Lagerkanals, an der die Ladeeinheit (6) von dem Umsetzgerät (1) oder einem andern Umsetzgerät aufgenommen werden kann.

10. Verfahren zur Bedienung eines Kanallagers (7), mit den Schritten
Bereitstellen eines Umsetzgeräts (1) gemäß einem der Ansprüche 1 bis 7;
Absetzen des ersten Shuttles (4) in einem ersten Lagerkanal des Kanallagers (7);
Absetzen des zweiten Shuttles (5) in einem zweiten Lagerkanal des Kanallagers (7), der horizontal und/oder vertikal von dem ersten Lagerkanal beabstandet ist;
a) Einlagern einer Ladeeinheit (6) in dem ersten Lagerkanal durch das erste Shuttle (4) oder b) Aufnehmen einer Ladeeinheit (6) aus dem ersten Lagerkanal durch das erste Shuttle (4) und Verbringen der Ladeeinheit (6) an eine Übergabeposition des Lagerkanals und Aufnehmen einer weiteren Ladeeinheit (6) von einer Übergabeposition durch das Umsetzgerät (1) mithilfe eines Förderelements des Umsetzgeräts (1) und ohne Verwendung des ersten Shuttles (4); und
c) Umlagern einer Ladeeinheit (6) durch das zweite Shuttle (5) in dem zweiten Lagerkanal von einem zentralen Bereich des Lagerkanals an eine Übergabeposition des Lagerkanals, an der die Ladeeinheit (6) von dem Umsetzgerät (1) oder einem andern Umsetzgerät aufgenommen werden kann.

## Claims

1. A handling unit (1) comprising:
a first transport place for receiving a first shuttle (4); and
a second transport place different from the first transport place for receiving a second shuttle (5),
wherein the handling unit (1) comprises a load receiving means which provides the first and the second transport place, and a lifting unit (2) on which the load receiving means is mounted,
wherein the lifting unit (2) is configured to move the load receiving means vertically,
**characterized in that**
the first transport place is configured to carry a loading unit (6) and is positioned above the lifting unit whereas the second transport place is not configured to carry a loading unit (6) and is positioned underneath the lifting unit (2).

2. The handling unit (1) according to claim 1, which further comprises a first shuttle (4) on the first transport place and a second shuttle (5) on the second transport place.

3. The handling unit (1) according to any one of the preceding claims, which further comprises a conveying element (3) which is configured to take over at a storage point of a channel storage system (7) a loading unit (6) without shuttle from a stationary conveying system or a mobile conveying means or to transfer at the retrieval point of a channel storage system (7) a loading unit (6) without shuttle to a stationary conveying system or a mobile conveying means.

4. The handling unit (1) according to claim 3, wherein the conveying element (3) is further configured to transfer a loading unit (6) to the first shuttle (4) or to take it over from the first shuttle (4).

5. The handling unit (1) according to claim 3 or 4, wherein the first transport place is positioned on the conveying element (3).

6. The handling unit (1) according to any one of the preceding claims, in which the first and/or the second transport place is equipped with a charging device for the energy supply of the first or second shuttle (4, 5), respectively.

7. The handling unit (1) according to any one of the preceding claims, in which the handling unit (1) is a storage and retrieval unit.

8. A storage system which comprises a channel storage system (7) and a handling unit (1) according to any one of the preceding claims.

9. A method for operating a channel storage system (7), comprising the steps of
providing a handling unit (1) according to any one of claims 1 to 7;
putting down the first shuttle (4) in a first storage channel of the channel storage system (7);
putting down the second shuttle (5) in a second storage channel of the channel storage system (7) which is spaced apart horizontally and/or vertically from the first storage channel;
a) storing a loading unit (6) in the first storage channel by the first shuttle (4) or b) receiving a loading unit (6) from the first storage channel by the first shuttle (4) and receiving the first shuttle (4) with the loading unit (6) on the first transport place of the handling unit (1); and
c) relocating a loading unit (6) by the second shuttle (5) in the second storage channel from a central area of the storage channel to a transfer position of the storage channel at which the loading unit (6) can be received by the handling unit (1) or another handling unit.

10. A method for operating a channel storage system (7), comprising the steps of
providing a handling unit (1) according to any one of claims 1 to 7;
putting down the first shuttle (4) in a first storage channel of the channel storage system (7);
putting down the second shuttle (5) in a second storage channel of the channel storage system (7) which is spaced apart horizontally or vertically from the first storage channel;
a) storing a loading unit (6) in the first storage channel by the first shuttle (4) or b) receiving a loading unit (6) from the first storage channel by the first shuttle (4) and moving the loading unit (6) to a transfer position of the storage channel and receiving a further loading unit (6) from a transfer position by the handling unit (1) with the help of a conveying element of the handling unit (1) and without use of the first shuttle (4); and
c) relocating a loading unit (6) by the second shuttle (5) in the second storage channel from a central area of the storage channel to a transfer position of the storage channel at which the loading unit (6) can be received by the handling unit (1) or another handling unit.

## Revendications

1. Appareil de transbordement (1) comprenant :
un premier emplacement de transport destiné à accueillir une première navette ou shuttle (4) ; et
un deuxième emplacement de transport, qui est différent du premier emplacement de transport et est destiné à accueillir une deuxième navette ou shuttle (5) ;
l'appareil de transbordement (1) comprenant un moyen de réception de charge, qui réalise le premier et le deuxième emplacement de transport, et une unité de levage (2) sur laquelle est monté le moyen de réception de charge ;
l'unité de levage (2) étant configurée pour assurer le déplacement vertical du moyen de réception de charge ;
**caractérisé en ce que**
le premier emplacement de transport est configuré pour porter une unité de chargement (6) et se trouve au-dessus de l'unité de levage, tandis que le deuxième emplacement de transport n'est pas configuré pour porter une unité de chargement (6) et se situe en-dessous de l'unité de levage (2).

2. Appareil de transbordement (1) selon la revendication 1, comprenant, par ailleurs, une première navette (4) ou shuttle dans le premier emplacement de transport, et une deuxième navette (5) ou shuttle dans le deuxième emplacement de transport.

3. Appareil de transbordement (1) selon l'une des revendications précédentes, comprenant, par ailleurs, un élément de transport (3), qui est configuré pour, en un point d'entrée de stockage d'un rayonnage de stockage à canaux-navette (7), reprendre une unité de chargement (6), sans navette, à partir d'un système de transport stationnaire ou d'un moyen de transport mobile, ou bien pour, en un point de déstockage d'un rayonnage de stockage à canaux-navette (7), transférer une unité de chargement (6), sans navette, à un système de transport stationnaire ou à un moyen de transport mobile.

4. Appareil de transbordement (1) selon la revendication 3, dans lequel l'élément de transport (3) est par ailleurs configuré pour transférer une unité de chargement (6) à la première navette (4) ou respectivement reprendre une unité de chargement de la première navette (4).

5. Appareil de transbordement (1) selon la revendication 3 ou la revendication 4, dans lequel le premier emplacement de transport se trouve sur l'élément de transport (3).

6. Appareil de transbordement (1) selon l'une des revendications précédentes, dans lequel le premier et/ou le deuxième emplacement de transport est ou sont équipés d'un dispositif de charge pour l'alimentation en énergie de la première ou respectivement de la deuxième navette (4, 5).

7. Appareil de transbordement (1) selon l'une des revendications précédentes, l'appareil de transbordement (1) étant un transstockeur.

8. Système d'entrepôt de stockage, qui comprend un rayonnage de stockage à canaux-navette (7) et un appareil de transbordement (1) selon l'une des revendications précédentes.

9. Procédé pour assurer le service ou l'utilisation d'un rayonnage de stockage à canaux-navette (7), comprenant les étapes suivantes :
préparation et mise à disposition d'un appareil de transbordement (1) selon l'une des revendications 1 à 7 ;
dépôt de la première navette (4) dans un premier canal de stockage du rayonnage de stockage à canaux-navette (7) ;
dépôt de la deuxième navette (5) dans un deuxième canal de stockage du rayonnage de stockage à canaux-navette (7), qui est espacé horizontalement et/ou verticalement du premier canal de stockage ;
a) mise en stockage d'une unité de chargement (6) dans le premier canal de stockage par la première navette (4), ou b) accueil d'une unité de chargement (6) à partir du premier canal de stockage par la première navette (4) et accueil de la première navette (4) avec l'unité de chargement (6) dans le premier emplacement de transport de l'appareil de transbordement (1) ; et
c) transbordement d'une unité de chargement (6) par la deuxième navette (5) dans le deuxième canal de stockage, d'une zone centrale du canal de stockage à une position de transfert du canal de stockage, dans laquelle l'unité de chargement (6) peut être accueillie par l'appareil de transbordement (1) ou un autre appareil de transbordement.

10. Procédé pour assurer le service ou l'utilisation d'un rayonnage de stockage à canaux-navette (7), comprenant les étapes suivantes :
préparation et mise à disposition d'un appareil de transbordement (1) selon l'une des revendications 1 à 7 ;
dépôt de la première navette (4) dans un premier canal de stockage du rayonnage de stockage à canaux-navette (7) ;
dépôt de la deuxième navette (5) dans un deuxième canal de stockage du rayonnage de stockage à canaux-navette (7), qui est espacé horizontalement et/ou verticalement du premier canal de stockage ;
a) mise en stockage d'une unité de chargement (6) dans le premier canal de stockage par la première navette (4), ou b) accueil d'une unité de chargement (6) à partir du premier canal de stockage par la première navette (4), et amenée de l'unité de chargement (6) à une position de transfert du canal de stockage, et accueil d'une autre unité de chargement (6) par l'appareil de transbordement (1) à partir d'une position de transfert, à l'aide d'un élément de transport de l'appareil de transbordement (1) et sans utilisation de la première navette (4) ; et
c) transbordement d'une unité de chargement (6) par la deuxième navette (5) dans le deuxième canal de stockage, d'une zone centrale du canal de stockage à une position de transfert du canal de stockage, dans laquelle l'unité de chargement (6) peut être accueillie par l'appareil de transbordement (1) ou un autre appareil de transbordement.
